# EUROPÄISCHE PATENTANMELDUNG

(11) **EP 0 917 904 A2**
(43) Veröffentlichungstag der Anmeldung: **26.05.1999**
(21) Anmeldenummer: 98120977.8
(22) Anmeldetag: 05.11.1998
(51) Int. Cl.: B01D 53/14, B01D 53/18

(54) **Verfahren zur Rückspeisung von Absorberflüssigkeiten**

(30) Priorität: 22.11.1997 DE 19751850
(71) Anmelder: DEUTSCHE BABCOCK ANLAGEN GMBH, 46049 Oberhausen (DE)
(72) Erfinder: Dohmann, Joachim Dr., 46149 Oberhausen (DE); Keldenich, Kai Dr., 45134 Essen (DE); Mian, Iqbal Muhammad, 44149 Dortmund (DE)
(74) Vertreter: Radünz, Ingo, Dipl.-Ing.

(57) **Zusammenfassung**

Ein Absorber stehender Bauart zum Reinigen von Rauchgas mit Hilfe einer Absorberflüssigkeit enthält einen Mantel (1), der im unteren Teil mit einem Gaseintritt (2) und im oberen Teil mit einem Gasaustritt (5) versehen ist. Zwischen dem Gaseintritt (2) und dem Gasaustritt (5) begrenzt der Mantel (1) eine Waschzone (6), der über Sprühdüsen (8) die Absorberflüssigkeit zugeführt wird. Innerhalb der Waschzone (6) ist an der Innenwand des Mantels (1) eine umlaufende, offene Rinne (15) befestigt, deren Außenwand durch die Innenwand des Mantels (1) gebildet ist. Der Rinne (15) sind eine oder mehrere Düsen (21) zugeordnet, die in dem Wandbereich des Absorbers angeordnet und mit einer Flüssigkeit beaufschlagbar sind. Der aus den Düsen (21) austretende Flüssigkeitsstrahl (22) durchdringt den Randbereich der Waschzone (6).

## Beschreibung

Die Erfindung betrifft einen Absorber zum Reinigen von Rauchgas mit Hilfe einer Absorberflüssigkeit mit den Merkmalen des Oberbegriffes des Anspruches 1.

Bei diesem Absorber fällt die zu Tropfen zerstäubte Absorberflüssigkeit infolge der Schwerkrafteinwirkung dem Gasstrom entgegen und tritt mit dem Rauchgas in Kontakt, was den beabsichtigten Stoffübergang ermöglicht. Die Bewegungsrichtung der Tropfen in der Waschzone verläuft nicht exakt entlang einer geradlinigen Bahn. Abweichungen von der exakt vertikalen Bahn können z. B. dadurch auftreten, daß Kräfte von der Gasströmung auf die Tropfen übertragen werden. Als Ursache dafür kann z. B. die turbulente Fluktuation der Gasströmungsgeschwindigkeit oder aber auftretende Wirbel der Gasströmung angesehen werden. Eine andere Ursache kann in der Funktionsweise und Anordnung der Sprühdüsen gesehen werden, deren austretende Flüssigkeitsstrahlen horizontal gerichtete Richtungsanteile aufweisen. Die Abweichung der Tropfenbahnen von der exakt vertikalen Richtung bedeutet ein Auftreten wandwärts gerichteter Bewegungsanteile der Tropfen. Bei dem Auftreffen der Tropfen auf die Wand wird diese benetzt. Es bildet sich ein Flüssigkeitsfilm aus, der an der Absorberwand abläuft.

Besonders ausgeprägt ist das Auftreten von ablaufenden Flüssigkeitsfilmen, wenn die Absorberwand gegenüber der Vertikalen geneigt ist. Insbesondere in den Fällen, in denen der Normalenvektor der Absorberwand mit dem aufwärts gerichteten Geschwindigkeitsvektor der Strömung der dispersen Phase einen stumpfen Winkel einschließt, kann die Absorberwand direkt beregnet werden, was zur ausgeprägten Ausbildung eines Flüssigkeitsfilmes führt. Der Gesamt-Volumenstrom dieses Wandfilmes kann im Extremfall die gesamte Umlaufmenge der Waschflüssigkeit aufnehmen. Schätzungen für technisch gebräuchliche Anwendungen ergaben aber, daß je nach Absorberabmessungen etwa 10% bis 30% der Umlaufmenge als Wandfilm ablaufen dürfte.

Bei technisch üblichen Betriebsbedingungen sind die auf den Wandfilm durch die Gasphase induzierten Schubspannungen nicht so groß, daß es dort zu einer nennenswerten Bildung und Freisetzung von Tropfen kommt. Die Wand des Absorbers stellt aus diesem Grund eine Senke für Tropfen dar. Infolge dessen verarmt die wandnahe Strömung der dispersen Phase an Tropfen. Der Absorptionsflüssigkeitsregen besitzt in der Nähe der Wände eine geringere Dichte. Dadurch wird in diesen Bereichen der Gasströmung ein geringerer Widerstand entgegengesetzt, was die Gasströmung lokal intensiviert. Dadurch verschlechtert sich das lokale Verhältnis zwischen Gasmenge und Absorptionsflüssigkeitsmenge, was sich ungünstig auf das Stoffaustauschverhalten auswirkt. Messungen der örtlichen Konzentrationsverteilungen abzuscheidener Rauchgasbestandteile zeigten, daß es im Randbereich der Waschzone tatsächlich zu einer geringeren Stoffabscheidung kommt, als dies im Kernbereich der Absorptionszone der Fall ist.

Der Wandfilm vermag mit größerer Geschwindigkeit aus der Waschzone abzufließen, als die Tropfenschwarmströmung es vermag. Außerdem ist die spezifische Stoffaustauschfläche von Filmströmungen geringer als die von Tropfenschwärmen, weshalb ihr Beitrag zur Stoffabscheidung entsprechend gering im Vergleich zum Stoffaustausch der Tropfenschwarmströmung ausfällt, was mit den beobachtbaren örtlichen Konzentrationsverteilungen korrespondiert. Das Auftreten des Wandfilmes entspricht einem Verlust von Absorptionsflüssigkeit, da der Stoffaustausch zwischen dem Rauchgas und der im Wandfilm ablaufenden Absorptionsflüssigkeit nicht oder nur unzureichend ablaufen kann. Die im Wandfilm ablaufende Absorptionsflüssigkeit gelangt überwiegend ungenutzt zum Sumpf des Absorbers zurück. Obwohl kein oder nur ein geringer Nutzen für den als Wandfilm ablaufenden Flüssigkeitsanteil entsteht, müssen auch für diesen Anteil der umgewälzten Flüssigkeit erhebliche Mengen an Energie für die Umwälzung und Zerstäubung aufgewendet werden. Dies stellt einen Nachteil der bekannten Absorbertypen dar.

Der Erfindung liegt die Aufgabe zugrunde, den gattungsgemäßen Absorber derart zu gestalten, daß die Absorberflüssigkeit besser ausgenutzt werden kann.

Diese Aufgabe wird erfindungsgemäß durch die kennzeichnenden Merkmale des Anspruches 1 gelöst. Vorteilhafte Ausgestaltungen der Erfindung sind Gegenstand der Unteransprüche.

Bei dem erfindungsgemäßen Absorber wird der Wandfilm der Waschzone des Absorbers zugeführt, bevor der Wandfilm durch Abfließen das Niveau des Absorbersumpfspiegels erreicht hat. Der aus den Düsen austretende Flüssigkeitsstrahl durchquert den abfließenden Wandfilm. Durch Impulsübertragung erfährt der Wandfilm eine Änderung seiner Bewegungsrichtung und zwar ebenfalls in Richtung der Waschzone des Absorbers. Bei der Impulsübertragung findet eine Bildung von Tropfen statt, die sowohl aus der zugeführten Flüssigkeit, als auch aus der Wandfilmflüssigkeit bestehen. Dies ist als nutzbarer und vorteilhafter Effekt anzusehen, da die Wandfilmflüssigkeit erneut der Waschzone zugeführt wird und bei diesem Vorgang neue Stoffaustauschflächen gebildet werden.

Mehrere Ausführungsbeispiele sind in der Zeichnung dargestellt und werden im folgenden näher erläutert. Es zeigen:
- Fig. 1: schematisch den Längsschnitt durch einen Absorber,
- Fig. 2: die Einzelheit Z nach Fig. 1,
- Fig. 3: die Seitenansicht zu Fig. 2,
- Fig. 4: die Einzelheit Z nach Fig. 1 gemäß einer anderen Ausführungsform,
- Fig. 5: die Seitenansicht zu Fig. 4,
- Fig. 6: die Seitenansicht zur Einzelheit Z nach Fig. 1 gemäß einer weiteren Ausführungsform und
- Fig. 7: die Einzelheit Z nach Fig. 1 gemäß einer weiteren Ausführungsform.

Der als Sprühturm ausgebildete Absorber dient zur Abscheidung von Schadstoffen, wie SO₂, HCl, HF oder Staub aus Rauchgas. Er besteht aus einem äußeren Mantel 1, in dessen unteren Teil ein Gaseintritt 2 mündet und an dessen oberen Teil sich über einen Absorberkopf 3 und eine Haube 4 ein Gasaustritt 5 anschließt. Zwischen dem Gaseintritt 2 und dem Gasaustritt 5 befindet sich eine Waschzone 6, der über Verdüsungsebenen 7 eine Absorberflüssigkeit zugeführt wird. In den Verdüsungsebenen 7 befinden sich Sprühdüsen 8, deren Aufgabe die Erzeugung von Tropfen ist. Die eingesprühte Absorberflüssigkeit sammelt sich nach dem Durchgang durch die Waschzone 6 in einem Absorbersumpf 9, der in dem unteren Teil des Absorbers unterhalb des Gaseintrittes 2 vorgesehen ist. Aus dem Absorbersumpf 9 wird die Absorberflüssigkeit mit Hilfe einer oder mehrerer Umwälzpumpen 10 entnommen und über eine oder mehrere Förderleitungen 11 zu den Sprühdüsen 8 in den Verdüsungsebenen 7 gefördert. Ein Teil der Absorberflüssigkeit wird aus dem Absorbersumpf 9 abgezogen und durch frische Absorberflüssigkeit ersetzt.

Oberhalb der oberen Verdüsungsebene 7 ist in dem Absorberkopf 3 ein erster Tropfenabscheider 12, der als Grobabscheider dient, und in dem Gasaustritt 5 ist ein zweiter Tropfenabscheider 13, der als Feinabscheider dient, angeordnet. Die nur schematisch dargestellten Tropfenabscheider 12, 13 bestehen aus handelsüblichen Lamellenabscheidern.

Das zu reinigende Rauchgas tritt durch den Gaseintritt 2 in den unteren Teil des Absorbers ein. Innerhalb des Absorbers wird das Rauchgas in die vertikale Richtung nach oben umgelenkt und tritt durch die Waschzone 6 hindurch. In der Waschzone 6 treten das Rauchgas und die Absorberflüssigkeit in intensiven Kontakt miteinander, wodurch ein Stoffübergang ermöglicht wird. Die Absorberflüssigkeit besteht aus einer wäßrigen Suspension, die zum einen ein Neutralisationsmittel, z. B. Kalkstein oder Kalkhydrat, und zum anderen gelöste oder aus der Lösung kristallisierte Reaktionsprodukte wie z. B. CaCl₂, CaF₂, CaSO₃ oder CaSO₄ enthält. Ferner können der Absorberflüssigkeit noch Additive, wie z. B. Carbon- oder Dicarbonsäuren, die den pH-Wert der Absorberflüssigkeit puffern, Antischaummittel oder Adsorbentien für organische Spurenstoffe zugefügt werden.

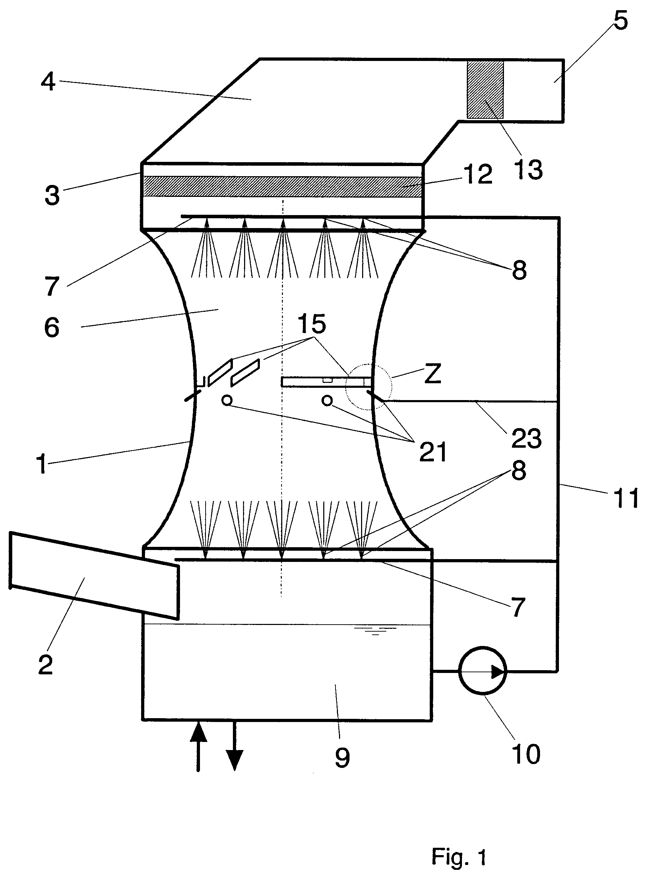

Der die Waschzone 6 begrenzende Teil des Mantels 1 kann vertikal und ohne Querschnittveränderung verlaufen. Gemäß Fig. 1 verjüngt sich der Mantel 1 in Strömungsrichtung des Rauchgases zunächst auf einen engsten Querschnitt und erweitert sich anschließend wieder. Bei dem dargestellten Absorber befindet sich der engste Querschnitt in der halben Höhe der Waschzone 6. Die Verjüngung und die Erweiterung zeigen vorzugsweise einen stetigen Verlauf. Der unterhalb des engsten Querschnittes liegende Teil der Waschzone 6 kann eine geringere Höhe aufweisen als der Teil oberhalb des engsten Querschnittes. Im Extremfall kann der untere Teil ganz entfallen, so daß die Waschzone 6 mit dem engsten Querschnitt beginnt und lediglich sich anschließend erweitert.

Der Mantel 1 weist vorzugsweise einen kreisrunden Querschnitt auf. Daneben ist auch eine rechteckige oder eine sonstige Querschnittsform möglich. Der die Waschzone 6 begrenzende Teil des Mantels 1 kann beispielsweise aus zwei Pyramiden- oder Kegelstümpfen bestehen, die direkt oder über einen Zwischenabschnitt, der mit senkrechten Wänden versehen sein kann, aneinander stoßen. Der Mantel 1 kann auch mit einer nach innen gewölbten Kontur versehen sein. Diese Kontur kann der mathematischen Form einer Hyperbel folgen. Weist der Mantel 1 einen kreisrunden Querschnitt auf, so zeigt die Kontur des Mantels 1 die Form eines einschaligen Rotationshyperboloids. Diese Form ist in Fig. 1 der Zeichnung dargestellt.

Ein Teil der über die Sprühdüsen 8 der oberen Verdüsungsebene 7 zugeführten Absorberflüssigkeit fließt als Wandfilm 14 an der Innenwand des Mantels 1 entlang und gelangt so in den Absorbersumpf 9, ohne zuvor in Kontakt mit dem zu reinigenden Rauchgas gekommen zu sein. Um diesen Teil der Absorberflüssigkeit nutzen zu können, ist innerhalb der Waschzone 6 der zur Fließrichtung des Wandfilmes 14 an der Innenwand des Mantels 1 eine umlaufende, oben offene Rinne 15 angebracht. Diese Rinne 15 schließt sich dicht an die Innenwand des Mantels 1 an, wobei die Außenwand der Rinne 15 durch den Mantel 1 des Absorbers gebildet ist. Die Rinne 15 weist eine tangential zu dem Mantel 1 des Absorbers weisende Stirnwand 16, einen Boden 17 und eine Seitenwand 18 auf. Mit Hilfe dieser Rinne 15 wird die als Wandfilm 14 herab fließende Flüssigkeit gesammelt. In der Rinne 15 bildet sich eine offene Gerinneströmung aus.

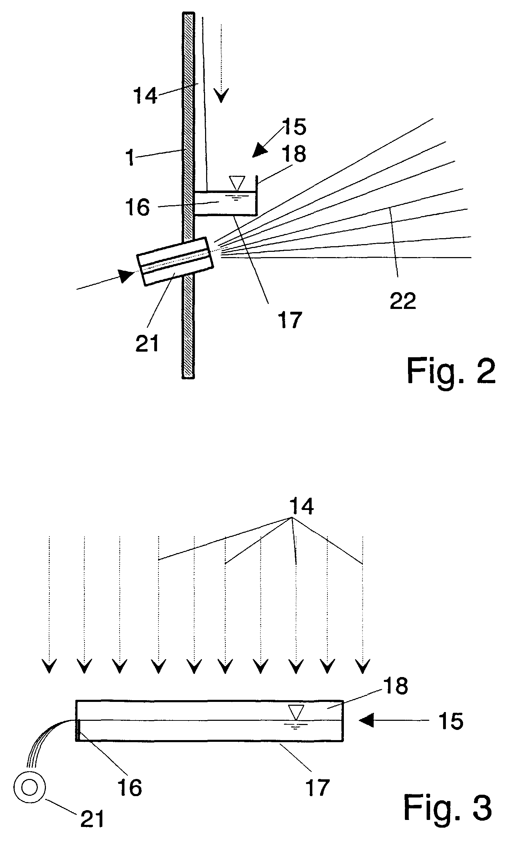

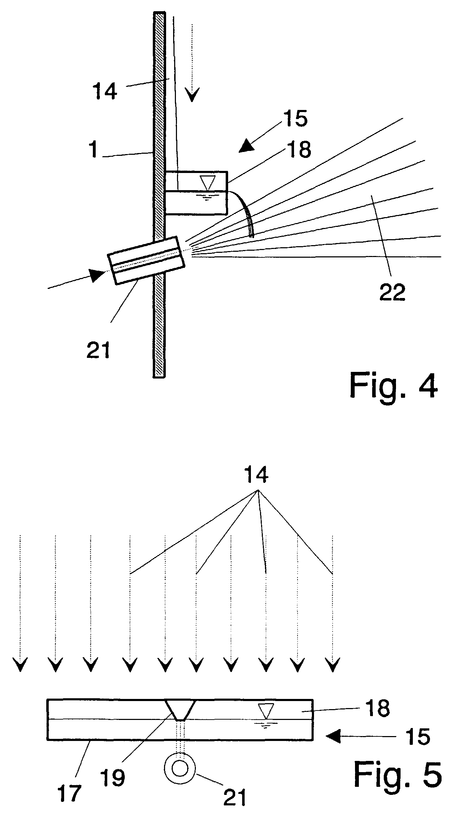

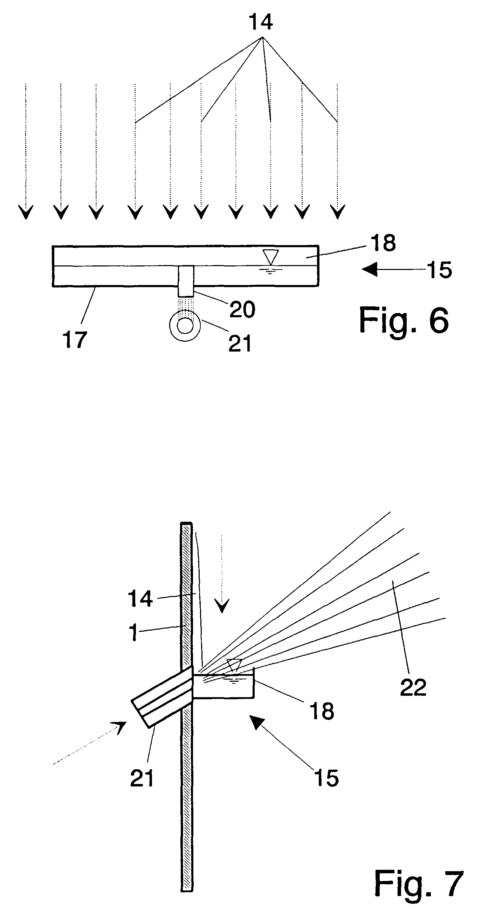

Insbesondere bei der Verwendung von schleißenden Waschflüssigkeiten ist in der Rinne 15 ein Mindestfüllstand einzuhalten. Dies kann dadurch geschehen, daß die Stirnwand 16 als Überlaufwehr ausgebildet ist (Fig. 2, 3). In der Seitenwand 18 können auch eine oder mehrere Randausnehmungen 19 vorgesehen sein, die einen oder mehrere gezielte Überlaufpunkte darstellen (Fig. 4, 5). Schließlich kann die Rinne 15 mit einem oder mehreren den Boden 17 durchdringenden Ablaufrohren 20 versehen sein, die Ausflußpunkte bilden (Fig. 6).

Die Rinne 15 kann horizontal (rechte Hälfte in Fig. 1) oder gegen die Horizontale geneigt (linke Hälfte in Fig. 1) angeordnet sein. Bei der geneigten Anordnung der Rinne 15 wird verhindert, daß sich in der Rinne 15 Ablagerungen bilden. Die Rinne 15 kann durchgehend sein oder aus einzelnen Abschnitten bestehen. Die Abschnitte können ansteigend oder abwechselnd ansteigend und abfallend angeordnet sein. Die Rinne 15 kann auch sägezahnförmig ausgebildet sein (linke Hälfte in Fig. 1). Die Überlauf- oder Ausflußpunkte befinden sich nahe den jeweils tiefsten Stellen der Rinne 15.

Der Rinne 15 sind eine oder mehrere Düsen 21 zugeordnet, die in dem Mantel 1 angeordnet sind. Diese Düsen 21 sind mit einer Flüssigkeit beaufschlagbar und erzeugen einen Flüssigkeitsstrahl 22. Die Düsen 21 sind so ausgerichtet, daß die Flüssigkeitsstrahlen 22 horizontal oder nach oben oder schräg nach oben austreten. Dabei ist die Anordnung so getroffen, daß die Flüssigkeitsstrahlen 22 die Flüssigkeit durchdringen, die aus der Rinne 15 über die Überlaufpunkte oder die aus den Abflußpunkten abfließt. Die bisher ungenutzt abfließende Absorberflüssigkeit des Wandfilmes 14, der jetzt in der Rinne 15 aufgefangen wird, wird durch die Flüssigkeitsstrahlen 22 wieder in die Waschzone 6 eingetragen und kommt dort mit dem zu reinigenden Rauchgas in Kontakt. Gleichzeitig werden bei dem geschilderten Vorgang Tropfen gebildet, die neue Stoffaustauschflächen bilden.

Die Düsen 21 sind zusätzlich so angeordnet, daß die aus den Düsen 21 austretenden Flüssigkeitsstrahlen 22 entweder auf die Längsmittelachse der Waschzone 6 oder außermittig nach Art eine Sekante in den Randbereich der Waschzone 6 gerichtet sind.

Gemäß Fig. 7 münden die Düsen 21 direkt in die Rinne 15 ein. Die schräg nach oben aus diesen Düsen 21 austretenden Flüssigkeitsstrahlen 22 tragen einen Teil der in der Rinne 15 gesammelten Flüssigkeit des Wandfilmes 14 in die Waschzone 6 ein.

Die Düsen 21 werden vorzugsweise mit Absorberflüssigkeit beaufschlagt. Zu diesem Zweck wird von der die Absorberflüssigkeit im Umlauf fördernden Förderleitung 11 eine Leitung 23 abgezweigt und zu den Düsen 21 geführt. Die Absorberflüssigkeit zum Betrieb der Düsen 21 kann auch über eine eigene Zuführleitung mit einer eigenen Pumpe aus dem Absorbersumpf 9 entnommen werden. Ebenfalls kann frische Absorberflüssigkeit über die Düsen 21 dem Absorber zugeführt werden.

Es können mehrere der oben beschriebenen Rinnen 15 zusammen mit den dazu gehörenden Düsen 21 übereinander innerhalb der Waschzone 6 angeordnet sein. Auf diese Weise wird ein sich eventuell unterhalb einer Rinne 15 ausbildender Wandfilm 14 ebenfalls wieder in die Waschzone 6 eingetragen werden.

Der Wandfilm 14 bildet sich insbesondere auf geneigten Wandflächen des Mantels 1 aus. Bei dem dargestellten Absorber mit einem die Form eines einschaligen Rotationshyperboloids bildenden Mantels 1 ist die Rinne 15 in dem engsten Querschnitt der Waschzone 6 angeordnet. Diese Rinne 15 und weitere Rinnen 15 können auch oberhalb dieses engsten Querschnittes vorgesehen werden.

## Patentansprüche

1. Absorber zum Reinigen von Rauchgas mit Hilfe einer Absorberflüssigkeit, wobei der stehende Absorber einen Mantel (1) enthält, der im unteren Teil mit einem Gaseintritt (2) und im oberen Teil mit einem Gasaustritt (5) versehen ist und der zwischen dem Gaseintritt (2) und dem Gasaustritt (5) eine Waschzone (6) begrenzt, der über Sprühdüsen (8) die Absorberflüssigkeit zugeführt wird, dadurch gekennzeichnet, daß innerhalb der Waschzone (6) an der Innenwand des Mantels (1) eine umlaufende, offene Rinne (15) befestigt ist, deren Außenwand durch die Innenwand des Mantels (1) gebildet ist, daß der Rinne (15) eine oder mehrere Düsen (21) zugeordnet sind, die in dem Wandbereich des Absorbers angeordnet und mit einer Flüssigkeit beaufschlagbar sind und daß der aus den Düsen (21) austretende Flüssigkeitsstrahl (22) den Randbereich der Waschzone (6) durchdringt.

2. Absorber nach Anspruch 1, dadurch gekennzeichnet, daß die Düsen (21) mit Absorberflüssigkeit beaufschlagbar sind.

3. Absorber nach Anspruch 1 und 2, dadurch gekennzeichnet, daß von einer zu den Sprühdüsen (8) führenden Förderleitung (11) für die Absorberflüssigkeit eine oder mehrere Leitungen (23) abgezweigt und zu den Düsen (21) geführt sind.

4. Absorber nach Anspruch 1 und 2, dadurch gekennzeichnet, daß die Düsen (21) mit einer oder mehreren eigenen Zuführungsleitungen für die Flüssigkeit verbunden sind.

5. Absorber nach einem der Ansprüche 1 bis 4, dadurch gekennzeichnet, daß die Rinne (15) gegen die Horizontale geneigt angeordnet ist und ansteigende oder ansteigende und abfallende Abschnitte aufweist.

6. Absorber nach einem der Ansprüche 1 bis 5, dadurch gekennzeichnet, daß die Rinne (15) mit einem oder mehreren Ausfluß- oder einem oder mehreren Überlaufpunkten versehen ist und daß der aus der Düse (21) austretende Flüssigkeitsstrahl (22) gegen den aus dem Ausfluß- oder den Überlaufpunkt abfließenden Flüssigkeitstrom gerichtet ist.

7. Absorber nach einem der Ansprüche 1 bis 6, dadurch gekennzeichnet, daß die Düsen (21) in die Rinne (15) münden.

8. Absorber nach einem der Ansprüche 1 bis 7, dadurch gekennzeichnet, daß die aus den Düsen (21) austretenden Flüssigkeitsstrahlen (22) horizontal oder schräg nach oben oder nach oben gerichtet sind.

9. Absorber nach einem der Ansprüche 1 bis 8, dadurch gekennzeichnet, daß die aus den Düsen (21) austretenden Flüssigkeitsstrahlen (22) auf die Längsmittelachse der Waschzone (6) gerichtet sind.

10. Absorber nach einem der Ansprüche 1 bis 8, dadurch gekennzeichnet, daß die aus den Düsen (21) austretenden Flüssigkeitsstrahlen (22) außermittig in die Waschzone (6) gerichtet sind.

11. Absorber nach einem der Ansprüche 1 bis 10, dadurch gekennzeichnet, daß mehrere Rinnen (15) übereinander angeordnet sind.

12. Absorber nach einem der Ansprüche 1 bis 11, dadurch gekennzeichnet, daß der die Waschzone (6) begrenzende Mantel (1) mit einer Querschnittsverengung versehen ist und daß die Rinne (15) innerhalb oder in einem geringen Abstand oberhalb der Querschnittsverengung an der Innenwand des Mantels (1) angebracht ist.

13. Absorber nach Anspruch 12, dadurch gekennzeichnet, daß der die Waschzone (6) begrenzende Mantel (1) die Form eines einschaligen Rotationshyperboloids aufweist.
